# EUROPÄISCHE PATENTSCHRIFT

(11) **EP 1 808 797 B1**
(45) Veröffentlichungstag und Bekanntmachung des Hinweises auf die Patenterteilung: **26.03.2008**
(21) Anmeldenummer: 07000474.2
(22) Anmeldetag: 11.01.2007
(51) Int. Cl.: G06K 7/00, G06K 19/07, H04B 7/26, H04L 12/56, H04L 29/06

(54) **Drahtlose Datenübertragung mit RFID-Transponder**
Wireless data transfer using RFID-transponder
Transfert de données sans fil avec transpondeur d'identification par radiofréquence

(30) Priorität: 16.01.2006 DE 102006002514
(43) Veröffentlichungstag der Anmeldung: 18.07.2007
(73) Patentinhaber: ATMEL Germany GmbH, 74072 Heilbronn (DE)
(72) Erfinder: Fischer, Martin, 74629 Pfedelbach (DE); Friedrich, Ulrich, 74248 Ellhofen (DE); Masuch, Jens, 74081 Heilbronn (DE); Pangels, Michael, 71642 Ludwigsburg (DE); Ziebertz, Dirk, 74246 Eberstadt (DE)
(74) Vertreter: Baumann, Jörg

(56) Entgegenhaltungen:
- DE-A1- 10 252 349
- DE-A1- 19 531 275
- DE-A1- 19 717 505
- US-A1- 2005 237 163

## Beschreibung

Die Erfindung betrifft ein Verfahren zur drahtlosen Datenübertragung zwischen einer Basisstation und einem Transponder sowie einen Transponder nach dem Oberbegriff der unabhängigen Ansprüche.

Kontaktlose Identifikationssysteme oder so genannte Radio-Frequency-Identification(RFID)-Systeme bestehen üblicherweise aus einer Basisstation bzw. einem Lesegerät oder einer Leseeinheit und einer Vielzahl von Transpondern oder Remote-Sensoren. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung zwischen dem Transponder und der Basisstation weist der Transponder eine Schnittstelle eines bestimmten Schnittstellentyps auf, der kompatibel zum entsprechenden Schnittstellentyp der Basisstation ist. Die Schnittstellentypen können in einer ersten groben Gliederung in kontaktbehaftete und kontaktlose Typen eingeteilt werden.

Die Schnittstellentypen, bei denen die Datenübertragung kontakt- bzw. berührungslos erfolgt, unterscheiden sich unter anderem durch die zur Datenübertragung verwendete Arbeits- bzw. Trägerfrequenz, d.h. die durch die Basisstation gesendete Frequenz. Häufig verwendete Frequenzen sind beispielsweise 125 kHz (LF-Bereich), 13,56 MHz (RF-Bereich), ein Frequenzbereich zwischen 860 MHz bis 960 MHz (UHF-Bereich) und ein Frequenzbereich größer als 3GHz (Mikrowellenbereich).

Ein weiteres Unterscheidungsmerkmal unterschiedlicher Schnittstellentypen ist die Art der Kopplung zwischen den jeweiligen Schnittstellen des Transponders und der Basisstation. Hierbei wird unter anderem zwischen der so genannten induktiven oder magnetischen Kopplung und der so genannten Fernfeldkopplung unterschieden. Vereinfacht dargestellt, bilden bei der induktiven oder Nahfeldkopplung eine Antennenspule der Basisstation und eine Antennenspule des Transponders einen Transformator, weshalb diese Kopplungsart auch als transformatorische Kopplung bezeichnet wird. Bei der induktiven Kopplung ist eine maximale Entfernung zwischen dem Transponder und der Basisstation auf den Bereich eines Nahfeldes der verwendeten Antennen beschränkt. Der Nahfeldbereich wird im wesentlichen durch die Arbeitsfrequenz der Schnittstelle festgelegt.

Die Fernfeldkopplung beruht auf der Ausbreitung von elektromagnetischen Wellen, die sich von der verwendeten Antenne ablösen. UHF- oder Mikrowellensysteme beruhen üblicherweise auf einer Fernfeldkopplung. RF- oder HF-Systeme beruhen demgegenüber üblicherweise auf einer induktiven Kopplung. Diesbezüglichen Grundlagen sind beispielsweise in dem Lehrbuch Klaus Finkenzeller, RFID-Handbuch, 3. Aufl., HANSER, 2002, Kapitel 2.3 "Frequenz, Reichweite Kopplung", Kapitel 3.2.1 "induktive Kopplung" und Kapitel 4.2.1.1 "Übergang vom Nah- zum Fernfeld bei Leiterschleifen" beschrieben.

Zur Datenübertragung von einem Transponder zur Basisstation bei der induktiven Kopplung wird in der Regel die so genannte Lastmodulation verwendet, siehe hierzu beispielsweise Finkenzeller, Kapitel 3.2.1.2.1 "Lastmodulation".

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage eines Unterträgers geändert wird, siehe hierzu wiederum Finkenzeller, Kapitel 3.2.2 "elektromagnetische Backscatter-Kopplung".

Zur Datenübertragung werden so genannte Datenübertragungsprotokolle verwendet. Ein Datenübertragungsprotokoll legt hierbei unter anderem eine Arbeitsfrequenz, ein Modulationsverfahren, ein Kodierungsverfahren, Datenübertragungsraten, Datenübertragungsrahmenformate, Übertragungsparameter usw. fest.

Datenübertragungsprotokolle werden üblicherweise in unterschiedliche Schichten gegliedert. Ein Beispiel hierfür ist das so genannte OSI-Schichtenmodell mit sieben Datenübertragungsprotokollschichten. Die unterschiedlichen Schichten werden hierbei als Bitübertragungsschicht (Schicht 1), als Sicherungsschicht oder Daten-Verbindungs-Schicht (Schicht 2), als Vermittlungsschicht (Schicht 3), als Transportschicht (Schicht 4), als Sitzungsschicht (Schicht 5), als Darstellungsschicht (Schicht 6) und als Anwendungsschicht (Schicht 7) bezeichnet. Zur näheren Beschreibung des OSI-Schichtenmodells wird auf die einschlägige Literatur verwiesen.

Bei Transpondern sind die Datenübertragungsprotokolle schnittstellentypspezifisch, d.h. jedem Schnittstellentyp ist ein eigenes, proprietäres Datenübertragungsprotokoll zugeordnet. So ist beispielsweise für Transponder mit einer UHF-Schnittstelle mit Fernfeldkopplung im Frequenzbereich von 860 MHz bis 960 MHz ein Übertragungsprotokoll in dem Normungsvorschlag ISO/IEC_CD 18000-6C vom 07.01.2005 beschrieben. Für Transponder mit einer HF-Schnittstelle mit induktiver Kopplung mit einer Frequenz von 13,56 MHz ist ein Übertragungsprotokoll in der Norm ISO 14443 beschrieben. Die Datenübertragungsprotokolle unterscheiden sich hierbei signifikant über alle Protokollschichten hinweg.

In der WO 2005/109328 A1 und in der US 2005/237 163, gegen die die unabhängigen Ansprüche abgegrenzt sind, ist ein Transponder für so genannte remotekeyless-Anwendungen beschrieben, der über eine aktive, unidirektionale Schnittstelle für den UHF-Frequenzbereich und mehrere bidirektionale Schnittstellen für den LF-Frequenzbereich aufweist. Die UHF-Schnittstelle und die jeweiligen LF-Schnittstellen verwenden unterschiedliche, proprietäre Datenübertragungsprotokolle. Aufgrund der unterschiedlichen Datenübertragungsprotokolle ist eine einheitliche Verarbeitung der empfangenen oder zu sendenden Daten innerhalb eines gemeinsam verwendeten Protokollstacks nicht möglich.

In der DE 102 52 349 A1 ist ein tragbarer Datenträger beschrieben, bei dem Daten über eine drahtlose Schnittstelle und eine drahtgebundene bzw. kontaktbehaftete Schnittstelle anhand eines gemeinsamen Datenübertragungsprotokolls übertragen werden.

Der Erfindung liegt die Aufgabe zugrunde, einen Transponder mit einer ersten Schnittstelle eines ersten Schnittstellentyps und mindestens einer zweiten Schnittstelle eines zweiten Schnittstellentyps und ein Verfahren zur drahtlosen Datenübertragung zwischen einer Basisstation und einem derartigen Transponder zur Verfügung zu stellen, die eine einfache und kostengünstige Realisierung einer Protokollverarbeitung bzw. eines Protokollstacks der über die unterschiedlichen Schnittstellen zu übertragenden Daten ermöglicht.

Die Erfindung löst diese Aufgabe durch ein Verfahren nach Anspruch 1 und einen Transponder nach Anspruch 11.

Bevorzugte Ausführungsformen sind Gegenstand der Unteransprüche.

Bei dem erfindungsgemäßen Verfahren zur drahtlosen Datenübertragung zwischen einer Basisstation und einem Transponder werden Daten drahtlos bidirektional zwischen der Basisstation und dem Transponder über eine erste Schnittstelle eines ersten Schnittstellentyps anhand eines ersten Datenübertragungsprotokolls übertragen. Zusätzlich zur Datenübertragung über die erste Schnittstelle werden Daten wechselweise oder gleichzeitig drahtlos bidirektional zwischen der Basisstation und dem Transponder über mindestens eine zweite Schnittstelle eines zweiten Schnittstellentyps anhand eines zweiten Datenübertragungsprotokolls übertragen. Der erste und der zweite Schnittstellentyp können sich beispielsweise anhand der verwendeten Frequenz und/oder der Kopplungsart unterscheiden. Zur Vereinfachung der Protokollverarbeitung der über die unterschiedlichen Schnittstellentypen zu übertragenden Daten stimmen das erste Datenübertragungsprotokoll und das zweite Datenübertragungsprotokoll - über ein gegebenenfalls identisches Modulationsverfahren hinaus - mindestens teilweise überein.

Weiterhin werden Daten in Form von Datenrahmen mit einem Kopfabschnitt, der auch als Preamble bezeichnet wird, einem Mittelabschnitt und einem Endabschnitt übertragen. Eine derartige Übertragung kann von der Basisstation zum Transponder oder vom Transponder zur Basisstation erfolgen. Mit Hilfe des Kopfabschnitts sind Übertragungsparameter einstellbar, wobei Übertragungsparametereinstellungen des ersten Schnittstellentyps Übertragungsparametereinstellungen des zweiten Schnittstellentyps bewirken. Selbstverständlich ist es auch möglich, dass entsprechend Übertragungsparametereinstellungen des zweiten Schnittstellentyps Übertragungsparametereinstellungen des ersten Schnittstellentyps bewirken. Derartige Datenrahmen sind beispielsweise in der deutschen Patentanmeldung DE 10138217 der Anmelderin beschrieben. Ein weiteres Beispiel für eine Übertragungsparametereinstellung mit Hilfe einer Präambel findet sich in dem Normungsvorschlag ISO/IEC_CD 18000-6C vom 07.01.2005 unter 6.3.1.2.8. Dort werden Kodierungsparameter einer binären "0" bzw. einer binären "1" in der Präambel bzw. dem Kopfabschnitt eingestellt. Es ist möglich, die Übertragungsparametereinstellungen über Transformationsvorschriften zwischen den unterschiedlichen Schnittstellentypen zu konvertieren. Auf diese Weise ist eine einheitliche Übertragungsparametereinstellung beider Schnittstellen des Transponders möglich.

In einer Weiterbildung des Verfahrens werden zu übertragende Zeichen bei dem ersten Datenübertragungsprotokoll und bei dem zweiten Datenübertragungsprotokoll in gleicher Weise kodiert. Die übereinstimmende Kodierung kann sowohl die Kodierung von Zeichen, die von der Basisstation zum Transponder übertragen werden, als auch die Kodierung von Zeichen, die vom Transponder zur Basisstation übertragen werden, betreffen. Bevorzugte Kodierungen sind in dem Normungsvorschlag ISO/IEC_CD 18000-6C vom 07.01.2005 unter 6.3.1.2.3 und unter 6.3.1.3.2 beschrieben. Dies ermöglicht eine - bis auf die Modulation und die physikalische Übertragung - identische Verarbeitung von zu übertragenden Signalen, beispielsweise in einem gemeinsamen digitalen so genannten Front-End.

In einer Weiterbildung des Verfahrens stimmen das erste und das zweite Datenübertragungsprotokoll in einer Daten-Verbindungs-Schicht überein. Die Daten-Verbindungs-Schicht kann hierbei der Schicht 2 des OSI-Schichtenmodells oder auch einer Kombination der Schichten 2 bis 6 des OSI-Schichtenmodells entsprechen.

In einer Weiterbildung des Verfahrens stimmen das erste und das zweite Datenübertragungsprotokoll in einer Anwendungsschicht überein. Die Anwendungsschicht entspricht der Schicht 7 des OSI-Schichtenmodells. Auf diese Weise kann eine Transponderanwendung schnittstellentypunabhängig betrieben werden, wenn beispielsweise in bestimmten Ländern Schnittstellen eines bestimmten Typs nicht zur Verfügung stehen, kann die Anwendung transparent über die andere Schnittstelle ausgeführt werden.

In einer Weiterbildung des Verfahrens wird die erste Schnittstelle in einem Frequenzbereich von 400 MHz bis 6 GHz betrieben. Bevorzugt ist ein Frequenzbereich von 860 MHz bis 960 MHz.

In einer Weiterbildung des Verfahrens wird die zweite Schnittstelle in einem Frequenzbereich von 100 kHz bis 150 KHz betrieben.

In einer Weiterbildung des Verfahrens wird die zweite Schnittstelle in einem Frequenzbereich von 10 MHz bis 20 MHz betrieben.

In einer Weiterbildung des Verfahrens werden die erste Schnittstelle und die zweite Schnittstelle in einem identischen Frequenzbereich betrieben und die erste Schnittstelle basiert auf einer induktiven Kopplung mit der Basisstation und die zweite Schnittstelle basiert auf einer Fernfeldkopplung mit der Basisstation. Auf diese Weise ist eine gute Ausnutzung eines zur Verfügung stehenden Frequenzbereichs über unterschiedliche Kopplungsarten möglich.

In einer Weiterbildung des Verfahrens werden Daten von dem Transponder zur Basisstation über die erste und/oder die zweite Schnittstelle rückstreubasiert übertragen.

In einer Weiterbildung des Verfahrens wird der Transponder ausschließlich über die erste Schnittstelle und/oder über die zweite Schnittstelle mit Betriebsenergie versorgt, d.h. der Transponder ist ein passiver Transponder.

Der erfindungsgemäße Transponder umfasst also eine erste Schnittstelle eines ersten Schnittstellentyps zur bidirektionalen, drahtlosen Datenübertragung mit der Basisstation und mindestens eine zweite Schnittstelle eines zweiten Schnittstellentyps zur bidirektionalen, drahtlosen Datenübertragung mit der Basisstation. Eine mit der ersten Schnittstelle und der zweiten Schnittstelle gekoppelte, digitale Protokollverarbeitungseinheit ist zur einheitlichen, schnittstellentypunabhängigen Verarbeitung der von der ersten Schnittstelle und der zweiten Schnittstelle empfangenen und an diese zu übertragende Signale ausgebildet. Die Schnittstellen führen innerhalb der physikalischen Übertragungsschicht beim Senden von Daten eine Modulation mit einem Trägersignal, eine Verstärkung des modulierten Signals sowie ein anschließendes Senden über eine Antenne durch. Beim Empfangen von Daten werden von der Antenne empfangene Signale von der jeweiligen Schnittstelle demoduliert und an die Protokollverarbeitungseinheit übertragen, die dann keine schnittstellentypabhängige Verarbeitung mehr durchführt.

In einer Weiterbildung des Transponders ist die erste Schnittstelle zum Betrieb in einem Frequenzbereich von 400 MHz bis 6 GHz ausgebildet.

In einer Weiterbildung des Transponders ist die zweite Schnittstelle zum Betrieb in einem Frequenzbereich von 100 kHz bis 150 KHz ausgebildet.

In einer Weiterbildung des Transponders ist die zweite Schnittstelle zum Betrieb in einem Frequenzbereich von 10 MHz bis 20 MHz ausgebildet.

In einer Weiterbildung des Transponders ist die erste Schnittstelle und/oder die zweite Schnittstelle zur rückstreubasierten Übertragung von Daten zur Basisstation ausgebildet.

In einer Weiterbildung des Transponders ist die erste Schnittstelle und/oder die zweite Schnittstelle zur Fernfeldkopplung mit der Basisstation ausgebildet.

In einer Weiterbildung des Transponders ist die erste Schnittstelle und/oder die zweite Schnittstelle zur induktiven Kopplung mit der Basisstation ausgebildet.

In einer Weiterbildung des Transponders ist der Transponder ein passiver Transponder.

Die Erfindung wird nachfolgend unter Bezugnahme auf die Zeichnungen beschrieben. Hierbei zeigen schematisch:
Fig. 1 ein RFID-System mit einer Basisstation und einem Transponder und
Fig. 2 einen Kopfabschnitt eines von der Basisstation gesendeten Datenrahmens zur Einstellung von Übertragungsparametern.

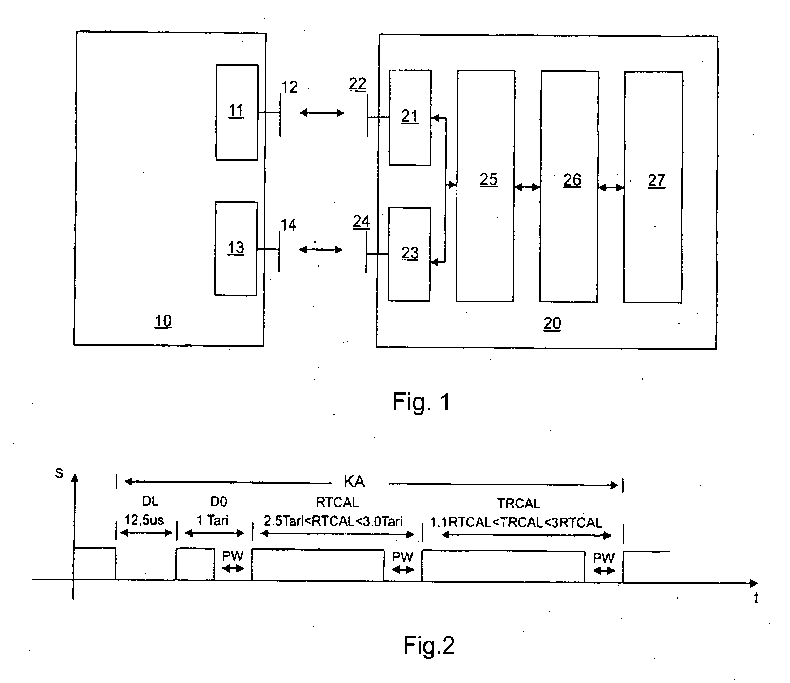

Fig. 1 zeigt ein RFID-System mit einer Basisstation 10 und einem Transponder 20.

Die Basisstation 10 umfasst eine erste Schnittstelle in Form eines analogen Front-Ends 11 und einer mit dem analogen Front-End 11 gekoppelten Antenne 12. Die erste Schnittstelle arbeitet über eine Fernfeldkopplung in einem Frequenzbereich von 860 MHz bis 960 MHz. Die Basisstation 10 umfasst zusätzlich eine zweite Schnittstelle in Form eines weiteren analogen Front-Ends 13 und einer mit dem analogen Front-End 13 gekoppelten Antenne 14. Die zweite Schnittstelle arbeitet über eine induktive Kopplung in einem Frequenzbereich von 13,56 MHz.

Der Transponder 20 umfasst eine erste Schnittstelle in Form eines analogen Front-Ends 21 und einer mit dem analogen Front-End 21 gekoppelten Antenne 22. Die erste Schnittstelle arbeitet über eine Fernfeldkopplung in einem Frequenzbereich von 860 MHz bis 960 MHz. Eine Datenübertragung zwischen der Basisstation 10 und dem Transponder 20 über deren jeweils erste Schnittstelle erfolgt über ein Datenübertragungsprotokoll in Übereinstimmung mit dem Normungsvorschlag ISO/IEC_CD 18000-6C vom 07.01.2005. Der Transponder 20 umfasst zusätzlich eine zweite Schnittstelle in Form eines weiteren analogen Front-Ends 23 und einer mit dem analogen Front-End 23 gekoppelten Antenne 24. Die zweite Schnittstelle arbeitet über eine induktive Kopplung in einem Frequenzbereich von 13,56 MHz. Eine Datenübertragung zwischen der Basisstation 10 und dem Transponder 20 über deren jeweils zweite Schnittstelle erfolgt physikalisch, d.h. mit einer Frequenz, einem Modulationsverfahren und Signalpegeln, die der Norm ISO 14443 entsprechen.

Die Datenübertragung vom Transponder 20 zur Basisstation 10 über die erste Schnittstelle 21 und 22 erfolgt rückstreubasiert. Die Datenübertragung vom Transponder 20 zur Basisstation 10 über die zweite Schnittstelle 23 und 24 erfolgt über eine Lastmodulation.

Die analogen Front-Ends 11, 13, 21 und 23 umfassen jeweils nicht gezeigte Schaltungsteile, die zur Ansteuerung der jeweiligen Antennen 12, 14, 22 bzw. 24 und zur Aufbereitung von Signalen dienen, die von den jeweiligen Antennen 12, 14, 22 bzw. 24 empfangen werden.

Der Transponder 20 umfasst weiterhin ein mit der ersten Schnittstelle 21 und 22 und der zweiten Schnittstelle 23 und 24 gekoppeltes digitales Front-End bzw. eine digitale Protokollverarbeitungseinheit 25, die zur einheitlichen, schnittstellentypunabhängigen Verarbeitung der von der ersten Schnittstelle bzw. dem ersten analogen Front-End 21 und der zweiten Schnittstelle bzw. dem zweiten analogen Front-End 23 empfangenen und an diese zu übertragende Signale ausgebildet ist. Das digitale Front-End 25 umfasst hierzu nicht gezeigte digitale Schaltkreise, wie beispielsweise Logik-Gatter, Zähler, Zeitgeber usw. Das digitale Front-End 25 dient im wesentlichen zur Verarbeitung der Protokollschichten unterhalb der Anwendungsschicht.

Das digitale Front-End 25 ist mit einer Datenverarbeitungseinheit 26 gekoppelt, die beispielsweise als Zustandsmaschine oder als Mikroprozessor realisiert sein kann. Die Datenverarbeitungseinheit 26 dient zur Steuerung der Funktion des Transponders 20 und implementiert somit die Anwendungsschicht innerhalb des OSI-Schichtenmodells. Beispielsweise werden in der Datenverarbeitungseinheit 26 die von der Basisstation 10 übertragenen Kommandos verarbeitet.

Die Datenverarbeitungseinheit 26 ist mit einem elektrisch löschbaren Speicher 27 gekoppelt, der zum dynamischen Speichern transponderanwendungsbezogener Daten dient.

Eine wesentliche Vereinfachung der digitalen Protokollverarbeitungseinheit 25 im Vergleich zu einem Fall, bei dem vollständig schnittstellentypspezifische Datenübertragungsprotokolle verwendet werden, wird dadurch erzielt, dass wesentliche Teile des Datenübertragungsprotokolls der ersten Schnittstelle, d.h. ein Protokoll in Übereinstimmung mit dem Normungsvorschlag ISOIIEC_CD 18000-6C vom 07.01.2005, auf die zweite Schnittstelle übertragen bzw. adaptiert werden. Bei der Protokolladaption können beispielsweise die Arbeitsfrequenz, Signalpegel und die rückstreubasierte Datenübertragung des Transponders an die zweite Schnittstelle angepasst werden.

Eine Übereinstimmung findet dann insoweit statt, dass zu übertragende Zeichen bei dem ersten Datenübertragungsprotokoll und bei dem zweiten Datenübertragungsprotokoll in gleicher Weise kodiert werden. Die übereinstimmende Kodierung kann sich auf die Datenübertragung von der Basisstation 10 zum Transponder 20 und/oder auf die Datenübertragung vom Transponder 20 zur Basisstation 10 erstrecken. Weiterhin können das erste und das zweite Datenübertragungsprotokoll in einer Daten-Verbindungs-Schicht und/oder in einer Anwendungsschicht übereinstimmen.

Fig. 2 zeigt einen Kopfabschnitt KA eines von der Basisstation 10 gesendeten Datenrahmens zur Einstellung von Übertragungsparametern der ersten und/oder der zweiten Schnittstelle. Die gezeigte Präambel bzw. der Kopfabschnitt KA entspricht der im Normungsvorschlag ISO/IEC_CD 18000-6C vom 07.01.2005 unter 6.3.1.2.8 beschriebenen Präambel. An den Kopfabschnitt schließt sich ein nicht gezeigter Mittelabschnitt und ein Endabschnitt mit einer Rahmenenderkennung an. Der Mittelabschnitt dient zum Übertragen von Nutzdaten, die mit Hilfe der im Kopfabschnitt KA enthaltenen Kodierungsinformationen kodiert werden.

Der Kopfabschnitt KA beginnt mit einem Delimiter DL, der den Rahmenanfang anzeigt. Der Delimiter DL wird durch Feldunterdrückung bzw.

Feldabschwächung des von der Basisstation 10 emittierten elektromagnetischen Feldes für eine Dauer von ca. 12,5 µs erzeugt.

An den Delimiter DL schließt sich ein Symbol DO an. Das Symbol D0 wird durch Einschalten des Feldes und anschließendes Ausschalten bzw. Abschwächen des Feldes für eine Dauer PW erzeugt. Die Zeitdauer des Symbols *D0 entspricht einer Pulsweitenkodierung einer binären "0" im nachfolgenden Mittelabschnitt.

An das Symbol D0 folgt das Symbol RTCAL. Die Zeitdauer des Symbols RTCAL wird durch die Basisstation 10 derart eingestellt, dass sie gleich der Länge des Symbols D0, d.h. einer binären "0", plus einer Zeitdauer ist, die einer Pulsweitenkodierung einer binären "1" im nachfolgenden Mittelabschnitt entspricht. Der Transponder misst die Zeitdauer des Symbols RTCAL und teilt die gemessene Zeitdauer durch zwei. Nachfolgende, im Mittelabschnitt durch die Basisstation 10 übertragene Daten bzw. Symbole werden als eine binäre "0" interpretiert, wenn deren Zeitdauer kleiner als die durch zwei geteilte Zeitdauer des Symbols RTCAL ist, und als eine binäre "1" interpretiert, wenn deren Zeitdauer größer als die durch zwei geteilte Zeitdauer des Symbols RTCAL ist.

Das Symbol TRCAL dient zur Einstellung von Übertragungsparametern der rückstreubasierten Datenübertragung vom Transponder 20 zur Basisstation 10. Hinsichtlich weiterer funktionaler Beschreibungen sei auf den Normungsvorschlag ISO/IEC_CD 18000-6C vom 07.01.2005 verwiesen.

Übertragungsparametereinstellungen durch den Kopfabschnitt KA des Übertragungsprotokolls der ersten Schnittstelle 21 und 22 bewirken gleichzeitig Übertragungsparametereinstellungen der zweiten Schnittstelle, gegebenenfalls über eine Transformations- bzw. Anpassungsvorschrift.

Der Transponder 20 ist passiv, d.h. er wird ausschließlich über die erste Schnittstelle 21 und 22 und/oder über die zweite Schnittstelle 23 und 24 mit Betriebsenergie versorgt.

Es versteht sich, dass zusätzlich zu den beiden gezeigten Schnittstellen 21 und 22 sowie 23 und 24 im Transponder 20 noch weitere Schniftstellen eines weiteren Typs vorgesehen sein können. Weiterhin ist es möglich, dass pro Schnittstellentyp eine getrennte Basiseinheit mit nur einer typzugehörigen Schnittstelle vorgesehen ist, d.h. dass der Transponder 20 mit Basisstationen betrieben wird, die nur einen der beiden Schnittstellentypen aufweisen.

Die gezeigten Ausführungsformen ermöglichen eine einfache und kostengünstige Realisierung einer Protokollverarbeitung bzw. eines Protokollstacks für einen Transponder mit unterschiedlichen physikalischen Schnittstellentypen.

## Patentansprüche

1. Verfahren zur drahtlosen Datenübertragung zwischen einer Basisstation (10) und einem Transponder (20), bei dem
- Daten drahtlos bidirektional zwischen der Basisstation (10) und dem Transponder (20) über eine erste Schnittstelle (21, 22) eines ersten Schnittstellentyps anhand eines ersten Datenübertragungsprotokolls übertragen werden,
**dadurch gekennzeichnet, dass**
- Daten drahtlos bidirektional zwischen der Basisstation (10) und dem Transponder (20) über mindestens eine zweite Schnittstelle (23, 24) eines zweiten Schnittstellentyps anhand eines zweiten Datenübertragungsprotokolls übertragen werden,
- das erste Datenübertragungsprotokoll und das zweite Datenübertragungsprotokoll mindestens teilweise übereinstimmen und
- Daten in Form von Datenrahmen mit einem Kopfabschnitt (KA), einem Mittelabschnitt und einem Endabschnitt übertragen werden und Übertragungsparameter mit Hilfe des Kopfabschnitts einstellbar sind, wobei Übertragungsparametereinstellungen des ersten Schnittstellentyps Übertragungsparametereinstellungen des zweiten Schnittstellentyps bewirken.

2. Verfahren nach Anspruch 1, **dadurch gekennzeichnet, dass** zu übertragende Zeichen bei dem ersten Datenübertragungsprotokoll und bei dem zweiten Datenübertragungsprotokoll in gleicher Weise kodiert werden.

3. Verfahren nach Anspruch 1 oder 2, **dadurch gekennzeichnet, dass** das erste und das zweite Datenübertragungsprotokoll in einer Daten-Verbindungs-Schicht übereinstimmen.

4. Verfahren nach einem der vorhergehenden Ansprüche, **dadurch gekennzeichnet, dass** das erste und das zweite Datenübertragungsprotokoll in einer Anwendungsschicht übereinstimmen.

5. Verfahren nach einem der vorhergehenden Ansprüche, **dadurch gekennzeichnet, dass** die erste Schnittstelle in einem Frequenzbereich von 400 MHz bis 6 GHz betrieben wird.

6. Verfahren nach einem der vorhergehenden Ansprüche, **dadurch gekennzeichnet, dass** die zweite Schnittstelle in einem Frequenzbereich von 100 kHz bis 150 KHz betrieben wird.

7. Verfahren nach einem der Ansprüche 1 bis 5, **dadurch gekennzeichnet, dass** die zweite Schnittstelle in einem Frequenzbereich von 10 MHz bis 20 MHz betrieben wird.

8. Verfahren nach einem der vorhergehenden Ansprüche, **dadurch gekennzeichnet, dass** die erste Schnittstelle und die zweite Schnittstelle in einem identischen Frequenzbereich betrieben werden und die erste Schnittstelle auf einer induktiven Kopplung mit der Basisstation basiert und die zweite Schnittstelle auf einer Fernfeldkopplung mit der Basisstation basiert.

9. Verfahren nach einem der vorhergehenden Ansprüche, **dadurch gekennzeichnet, dass** Daten von dem Transponder zur Basisstation über die erste und/oder die zweite Schnittstelle rückstreubasiert übertragen werden.

10. Verfahren nach einem der vorhergehenden Ansprüche, **dadurch gekennzeichnet, dass** der Transponder ausschließlich über die erste Schnittstelle und/oder über die zweite Schnittstelle mit Betriebsenergie versorgt wird.

11. Transponder zur drahtlosen Datenübertragung mit einer Basisstation (10) mit
- einer ersten Schnittstelle (21, 22) eines ersten Schnittstellentyps zur bidirektionalen, drahtlosen Datenübertragung mit der Basisstation (10)
**gekennzeichnet durch**
- mindestens eine zweite Schnittstelle (23, 24) eines zweiten Schnittstellentyps zur bidirektionalen, drahtlosen Datenübertragung mit der Basisstation (10),
- eine mit der ersten Schnittstelle (21, 22) und der zweiten Schnittstelle (23, 24) gekoppelte, digitale. Protokollverarbeitungseinheit (25), die zur einheitlichen, schnittstellentypunabhängigen Verarbeitung der von der ersten Schnittstelle (21, 22) und der zweiten Schnittstelle (23, 24) empfangenen und an diese zu übertragende Signale ausgebildet ist,
- wobei der Transponder zur Durchführung des Verfahrens nach einem der Ansprüche 1 bis 10 ausgebildet ist.

12. Transponder nach Anspruch 11, **dadurch gekennzeichnet, dass** die erste Schnittstelle (21, 22) zum Betrieb in einem Frequenzbereich von 400 MHz bis 6 GHz ausgebildet ist.

13. Transponder nach Anspruch 11 oder 12, **dadurch gekennzeichnet, dass** die zweite Schnittstelle (23, 24) zum Betrieb in einem Frequenzbereich von 100 kHz bis 150 KHz ausgebildet ist.

14. Transponder nach Anspruch 11 oder 12, **dadurch gekennzeichnet, dass** die zweite Schnittstelle (23, 24) zum Betrieb in einem Frequenzbereich von 10 MHz bis 20 MHz ausgebildet ist.

15. Transponder nach einem der Ansprüche 11 bis 14, **dadurch gekennzeichnet, dass** die erste Schnittstelle (21, 22) und/oder die zweite Schnittstelle (23, 24) zur rückstreubasierten Übertragung von Daten zur Basisstation (10) ausgebildet ist.

16. Transponder nach einem der Ansprüche 11 bis 15, **dadurch gekennzeichnet, dass** die erste Schnittstelle (21, 22) und/oder die zweite Schnittstelle (23, 24) zur Fernfeldkopplung mit der Basisstation (10) ausgebildet ist.

17. Transponder nach einem der Ansprüche 11 bis 16, **dadurch gekennzeichnet, dass** die erste Schnittstelle (21, 22) und/oder die zweite Schnittstelle (23, 24) zur induktiven Kopplung mit der Basisstation (10) ausgebildet ist.

18. Transponder nach einem der Ansprüche 11 bis 17, **dadurch gekennzeichnet, dass** der Transponder ein passiver Transponder (20) ist.

## Claims

1. Method for wireless data transmission between a base station (10) and a transponder (20), wherein
- data are transmitted wireless bidirectional between the base station (10) and the transponder (20) over a first interface (21, 22) of a first interface type based on a first data transmission protocol,
**characterized in that**
- data are transmitted wireless bidirectional between the base station (10) and the transponder (20) over at least a second interface (23, 24) of a second interface type based on a second data transmission protocol,
- the first data transmission protocol and the second data transmission protocol are at least partially identical and
- data are transmitted in form of a data frame having a header portion (KA), a middle portion and an end portion, wherein transmission parameters can be set using the header portion, wherein data transmission parameter settings of the first interface type cause data transmission parameter settings of the second interface type.

2. Method according to claim 1, **characterized in that** according to the first data transmission protocol and according to the second data transmission protocol characters to be transmitted are identically encoded.

3. Method according to claim 1 or 2, **characterized in that** the first and the second data transmission protocol comprise an identical data link layer.

4. Method according to anyone of the preceding claims, **characterized in that** the first and the second data transmission protocol comprise an identical application layer.

5. Method according to anyone of the preceding claims, **characterized in that** the first interface is operated in a frequency range between 400 MHz to 6 GHz.

6. Method according to anyone of the preceding claims, **characterized in that** the second interface is operated in a frequency range between 100 kHz to 150 kHz.

7. Method according to anyone of claims 1 to 5, **characterized in that** the second interface is operated in a frequency range between 10 MHz to 20 MHz.

8. Method according to anyone of the preceding claims, **characterized in that** the first and the second interface are operated in an identical frequency range, wherein the first interface is based on an inductive coupling with the base station and the second interface is based on an electromagnetic coupling with the base station.

9. Method according to anyone of the preceding claims, **characterized in that** data are transmitted from the transponder to the base station over the first and/or the second interface based on backscattering.

10. Method according to anyone of the preceding claims, **characterized in that** the transponder is supplied with energy only over the first interface and/or the second interface.

11. Transponder for wireless data transmission with a base station (10), comprising:
- a first interface (21, 22) of a first interface type for bidirectional wireless data transmission with the base station (10),
**characterized by**
- at least one second interface (23, 24) of a second interface type for bidirectional wireless data transmission with the base station (10),
- a digital protocol processing unit (25) coupled to the first interface (21, 22) and the second interface (23, 24) and adapted for a unitary interface type independent processing of signals received from an transmitted to the first interface and the second interface,
- wherein the transponder is arranged to implement the method according to anyone of claims 1 to 10.

12. Transponder according to claim 11, **characterized in that** the first interface (21, 22) is arranged to operate in a frequency range between 400 MHz to 6 GHz.

13. Transponder according to claim 11 or 12, **characterized in that** the second interface (23, 24) is arranged to operate in a frequency range between 100 kHz to 150 kHz.

14. Transponder according to claim 11 or 12, **characterized in that** the second interface (23, 24) is arranged to operate in a frequency range between 10 MHz to 20 MHz.

15. Transponder according to anyone of claims 11 to 14, **characterized in that** the first interface (21, 22) and/or the second interface (23, 24) is arranged to transmit data to the base station (10) based on backscattering.

16. Transponder according to anyone of claims 11 to 15, **characterized in that** the first interface (21, 22) and/or the second interface (23, 24) is arranged for an electromagnetic coupling with the base station (10).

17. Transponder according to anyone of claims 11 to 16, **characterized in that** the first interface (21, 22) and/or the second interface (23, 24) is arranged for an inductive coupling with the base station (10).

18. Transponder to anyone of claims 11 to 17, **characterized in that** the transponder is a passive transponder.

## Revendications

1. Procédé de transmission sans fil de données entre une station de base (10) et un transpondeur (20), dans lequel
- des données sont transférée sans fil de manière bidirectionnelle entre la station de base (10) et le transpondeur (20) à travers une première interface (21, 22) d'un premier type d'interface au moyen d'un premier protocole de transmission de données,
**caractérisé en ce que** :
- l'on transmet de manière bidirectionnelle sans fil des données entre la station de base (10) et le transpondeur (20) à travers au moins une deuxième interface (23, 24) d'un deuxième type d'interface au moyen d'un deuxième protocole de transmission de données,
- le premier protocole de transmission de données et le deuxième protocole de transmission de données coïncident au moins partiellement,
- l'on transmet des données sous forme de paquets de données comprenant une section d'en-tête (KA), une section intermédiaire et une section finale et **en ce que** les paramètres de transmission sont réglables au moyen de l'en-tête, des modifications des paramètres de transmission du premier type d'interface entraînant des modifications des paramètres de transmission du deuxième type d'interface.

2. Procédé selon la revendication 1, **caractérisé en ce que** l'on code de manière identique des signes à transmettre dans le cadre du premier protocole de transmission de données et dans le cadre du deuxième protocole de transmission de données.

3. Procédé selon la revendication 1 ou 2, **caractérisé en ce que** le premier et le deuxième protocole de transmission de données coïncident dans une couche d'intercommunication de données.

4. Procédé selon l'une quelconque des revendications précédentes, **caractérisé en ce que** le premier et le deuxième protocole de transmission de données coïncident dans une couche d'utilisation.

5. Procédé selon l'une quelconque des revendications précédentes, **caractérisé en ce que** la première interface est utilisée dans un domaine de fréquences allant de 400 MHz à 6 GHz.

6. Procédé selon l'une quelconque des revendications précédentes, **caractérisé en ce que** la deuxième interface est utilisée dans un domaine de fréquences allant de 100 kHz à 150 KHz.

7. Procédé selon l'une quelconque des revendications 1 à 5, **caractérisé en ce que** la deuxième interface est utilisée dans un domaine de fréquences allant de 10 MHz à 20 MHz.

8. Procédé selon l'une quelconque des revendications précédentes, **caractérisé en ce que** la première interface et la deuxième interface sont utilisées dans un domaine de fréquences identique et **en ce que** la première interface est basée sur un couplage inductif à la station de base et la deuxième interface sur un couplage de champ distant à la station de base.

9. Procédé selon l'une quelconque des revendications précédentes, **caractérisé en ce que** l'on transmet par rétrodiffusion des données du transpondeur à la station de base au moyen de la première et/ou de la deuxième interface.

10. Procédé selon l'une quelconque des revendications précédentes, **caractérisé en ce que** le transpondeur est alimenté en énergie de fonctionnement exclusivement par l'intermédiaire de la première interface et/ou de la deuxième interface.

11. Transpondeur pour la transmission sans fil de données à une station de base (10) comprenant
- une première interface (21, 22) d'un premier type d'interface pour la transmission sans fil de manière bidirectionnelle de données à la station de base (10)
**caractérisé par** :
- au moins une deuxième interface (23, 24) d'un deuxième type d'interface pour la transmission bidirectionnelle sans fil de données à la station de base (10),
- une unité numérique de traitement de protocole (25) couplée à la première interface (21, 22) et à la deuxième interface (23, 24), conçue pour traiter de manière uniforme et indépendante des types d'interface les signaux reçus par la première interface (21, 22) et la deuxième interface (23, 24) et à transmettre à celle-ci,
- le transpondeur étant conçu selon l'une quelconque des revendications 1 à 10 pour l'exécution du procédé.

12. Transpondeur selon la revendication 11, **caractérisé en ce que** la première interface (21, 22) est conçue pour être utilisée dans un domaine de fréquences allant de 400 MHz à 6 GHz.

13. Transpondeur selon la revendication 11 ou 12, **caractérisé en ce que** la deuxième interface (23, 24) est conçue pour être utilisée dans un domaine de fréquences allant de 100 kHz à 150 KHz.

14. Transpondeur selon la revendication 11 ou 12, **caractérisé en ce que** la deuxième interface (23, 24) est conçue pour être utilisée dans un domaine de fréquences allant de 10 MHz à 20 MHz.

15. Transpondeur selon l'une quelconque des revendications 11 à 14, **caractérisé en ce que** la première interface (21, 22) et/ou la deuxième interface (23, 24) est conçue pour la transmission par rétrodiffusion de données à la station de base (10).

16. Transpondeur selon l'une quelconque des revendications 11 à 15, **caractérisé en ce que** la première interface (21, 22) et/ou la deuxième interface (23, 24) est conçue pour le couplage de champ distant à la station de base (10).

17. Transpondeur selon l'une quelconque des revendications 11 à 16, **caractérisé en ce que** la première interface (21, 22) et/ou la deuxième interface (23, 24) est conçue pour le couplage inductif à la station de base (10).

18. Transpondeur selon l'une quelconque des revendications 11 à 17, **caractérisé en ce que** le transpondeur est un transpondeur (20) passif.
